# EUROPEAN PATENT APPLICATION

(11) **EP 4 494 904 A1**
(43) Date of publication of application: **22.01.2025**
(21) Application number: 23315285.9
(22) Date of filing: 19.07.2023
(51) Int. Cl.: B60H 1/00, B60H 3/06, B01D 53/04

(54) **DEVICE AND METHOD FOR REGENERATING AN AIR PURIFICATION COMPONENT OF A CABIN AIR SYSTEM OF A VEHICLE**

(71) Applicant: MANN+HUMMEL Ventures Pte. Ltd., Singapore 139234 (SG)
(72) Inventor: Michel, Christiane, 71636 Ludwigsburg (DE); Mbadinga Mouanda, Gelase, 71636 Ludwigsburg (DE); Zenner, Julien, 71636 Ludwigsburg (DE)
(74) Representative: Mann + Hummel Intellectual Property

(57) **Abstract**

Aspects concern a method (500) for regenerating an air purification component of a cabin air system of a vehicle (100), the method (500) comprising determining (501) whether the vehicle (100) is in an indoor environment (403) or an outdoor environment (401, 402) and initiating (502) an air purification component regeneration procedure (200) for the air purification component in response to a positive determination of the vehicle (100) being in the outdoor environment (401, 402).

## Description

### TECHNICAL FIELD

Various aspects of this disclosure relate to devices and methods for regenerating an air purification component of a cabin air system of a vehicle.

### BACKGROUND

Cabin air systems of vehicles typically comprise an air purification component (e.g. a filter) for removing pollutants from the air that is supplied to the vehicle interior, such as carbon monoxide, carbon dioxide, or oxides of nitrogen. Such an air purification component eventually gets saturated and needs to be replaced which is inconvenient for the vehicle's owner and leads to waste. An alternative for replacement is therefore the regeneration of such an air purification component filter which may, depending on the type of air purification component, for example, be done by heating it to a high temperature. However, various issues need to be taken into account for regeneration such as energy consumption e.g. for heating the air purification component and pollution that is caused by the regeneration procedure, e.g. by desorbing gas when regenerating the air purification component.

Accordingly, suitable approaches for regenerating air purification components are desirable.

### SUMMARY

Various embodiments concern a method for regenerating an air purification component of a cabin air system of a vehicle, the method comprising determining whether the vehicle is in an indoor environment or an outdoor environment and initiating an air purification component regeneration procedure for the air purification component in response to a positive determination of the vehicle being in the outdoor environment.

Various embodiments concern a method for regenerating an air purification component of a cabin air system of a vehicle, the method comprising obtaining location or position data indicative of a location of the vehicle, based on the position data, obtaining, from a map database comprising information on indoor and outdoor locations, determining, by a processor, whether the position data indicates an indoor environment or an outdoor environment by accessing a map database, stored in memory and optionally via a communication interface, comprising information on indoor and outdoor locations and obtaining the information for the position data and initiating, by the processor an air purification component regeneration procedure for the air purification component in response to a positive determination of the vehicle being in the outdoor environment, or receiving by an air purification controller, for example a microcontroller, the determination whether the position data indicates an indoor environment or an outdoor environment and/or instructions to initiate air purification, and initiating, by the air purification controller, an air purification component regeneration procedure for the air purification component in response to a positive determination of the vehicle being in the outdoor environment.

According to some embodiments, the method comprises determining whether the vehicle is in the indoor environment or the outdoor environment by detecting a position of the vehicle within or out of a geographical boundary, or by detecting a crossing of the geographical boundary between the indoor environment and the outdoor environment.

According to some embodiments, the method comprises generating, in response to a negative determination of the vehicle being in the outdoor environment, a control signal which blocks the initiation of the air purification component regeneration procedure (for example, a microcontroller may block the regeneration procedure (in software) or a switch controlled by the control signal (e.g. transistor) may cut power to a corresponding component for regeneration (e.g. a heater) in case the indoor detection signal indicates indoors).

According to some embodiments, the method comprises determining whether the vehicle is in the indoor environment or the outdoor environment in response to the vehicle being turned off.

According to some embodiments, the method comprises, in response to a positive determination of the vehicle being in the indoor environment, measuring a level of pollution of air surrounding the vehicle and initiating the air purification component regeneration procedure in response to that the level of pollution is below a predetermined threshold.

According to some embodiments, the method comprises continuously monitoring the level of pollution and stopping the air purification component regeneration procedure in response to that the level of pollution exceeds a predetermined pollution threshold and continuing the air purification component regeneration procedure in response to that the level of pollution falls below the predetermined pollution threshold.

According to some embodiments, the level of pollution comprises or is a level of pollution for a pollutant that is generated when the air purification component is regenerated.

According to some embodiments, the level of pollution comprises at least one of a carbon dioxide concentration, a pesticide concentration, and a concentration of a volatile substance.

According to some embodiments, the vehicle is an electric vehicle or a hybrid vehicle.

According to some embodiments, the method comprises initiating the air purification component regeneration procedure in response to a positive determination of the vehicle being in the outdoor environment and a battery charge level of the vehicle is above a predetermined charge level threshold.

According to some embodiments, the method comprises determining whether the vehicle is charging at a charging station, and obtaining location-based data in response to a positive determination of the vehicle being charging at the charging station.

According to some embodiments, the location-based data is obtained from the charging station or a computer device used to request the charging.

According to some embodiments, the location-based data is used in determining whether the vehicle is in the indoor environment or the outdoor environment.

According to some embodiments, the method comprises initiating an air purification component regeneration procedure for the air purification component only in case of a positive determination that the vehicle is charging at a charging station.

According to some embodiments, the method further comprises, in response to a positive determination of the vehicle being in the indoor environment, determining (e.g. by measuring or acquiring data from a data base) a level of air ventilation surrounding the vehicle and initiating the air purification component regeneration procedure in response to that the level of air-ventilation is above a predetermined threshold.

According to some embodiments, a cabin air system controller is provided configured to perform the method of any one of the embodiments described above.

According to some embodiments, a vehicle having a cabin air system is provided, the cabin air system comprising a cabin air system controller configured to regenerate an air purification component of the cabin air system, the cabin air system controller comprises at least one processor configured to determine whether the vehicle is in an indoor environment or an outdoor environment and initiate an air purification component regeneration procedure for the air purification component in response to a positive determination of the vehicle being in the outdoor environment.

According to some embodiments, the cabin air system controller is configured to obtain a location data of the vehicle to determine whether the vehicle is in the indoor environment or the outdoor environment.

According to some embodiments, a computer program element is provided comprising program instructions, which, when executed by one or more processors, cause the one or more processors to perform the method of any one of the embodiments described above.

According to some embodiments, a computer-readable medium is provided comprising program instructions, which, when executed by one or more processors, cause the one or more processors to perform the method of any one of the embodiments described above.

It should be noted that embodiments described in context of the method are analogously valid for the vehicle and cabin air system controller and vice versa.

### BRIEF DESCRIPTION OF THE DRAWINGS

The invention will be better understood with reference to the detailed description when considered in conjunction with the non-limiting examples and the accompanying drawings, in which:
- FIG. 1 shows a vehicle with a cabin air system.
- FIG. 2 shows a flow diagram illustrating an air purification component regeneration controlling process.
- FIG. 3 shows a flow diagram illustrating a determination whether an electrical and/or hybrid vehicle is outdoors or indoors.
- FIG. 4 illustrates the use of a digital map for determination whether a vehicle is indoors or outdoors.
- FIG. 5 shows a flow diagram illustrating a method for regenerating an air purification component of a cabin air system of a vehicle.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of one of the devices or methods are analogously valid for the other devices or methods. Similarly, embodiments described in the context of a device are analogously valid for a vehicle or a method, and vice-versa.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

As used herein, the term "vehicle" includes a motor-powered vehicle, for example a vehicle having 2, 3, 4, or more wheels. Examples of the vehicle include a passenger car, a truck, a bus, a lorry, or a rail vehicle, for example, a locomotive. The vehicle may include an air inlet opening upstream from the cabin (e.g. in a front region), for allowing air ingress and an air outlet, downstream from the cabin, for allowing air egress. In some embodiments, the vehicle may be an electric vehicle or a hybrid (internal combustion engine and electrical) vehicle. In some embodiments, the vehicle may be an internal combustion engine (ICE) vehicle (i.e., non-hybrid). In some embodiments, the vehicle comprises an internal combustion engine. In some embodiments, the vehicle comprises a fuel cell. The term vehicle may further include autonomous vehicles.

As used herein and in accordance with various embodiments, the term "battery" may include a main battery of a hybrid or an electric vehicle, meaning that the battery is used as main source of power for driving. In some embodiments, the battery may be a battery of an ICE vehicle (non-hybrid). For example, such battery of an ICE vehicle may have a relatively large capacity and may operate the fan for a long time (e.g., 1h or more) without significant drain even if it is not being charge by an alternator. The term "battery" may also include one or more dedicated electrical power sources for various purposes such as the provisioning of electrical power to a cabin air system of a vehicle, particularly a filtration system of the cabin air system.

As used herein, the term "battery charge" or "battery charging status data" may represent a battery charging condition of the battery, for example, it may indicate that the battery is being charged, that the battery is being discharged, or that the battery is inactive. Example of a battery being inactive is not charging, and/or not discharging, for example, when the battery is electrically disconnected.

As used herein, the term "processor(s)" includes one or more electrical circuits capable of processing data, i.e. processing circuits. A processor may include analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, or a firmware.

As used herein, the term "module" refers to, or forms part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module may include memory (shared, dedicated, or group) that stores code executed by the processor.

As used herein, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take some forms and represent any information as understood in the art.

As used herein, the term "obtain" refers to the processor which actively obtains the inputs, or passively receives inputs from one or more sensors or data source. The term obtain may also refer to a processor, which receives or obtains inputs from a communication interface, e.g. a user interface. The processor may also receive or obtain the inputs via a memory, a register, and/or an analog-to-digital port.

As used herein, the term "indoor" or "indoors" refers broadly to any enclosed area, space, room or premises, such as residential and/or commercial blocks, that is, or are, substantially enclosed by a roof. The term "outdoor" or "outdoors" refers to any area, space, room or premises that is, or are, not indoor.

In the following, embodiments will be described in detail.

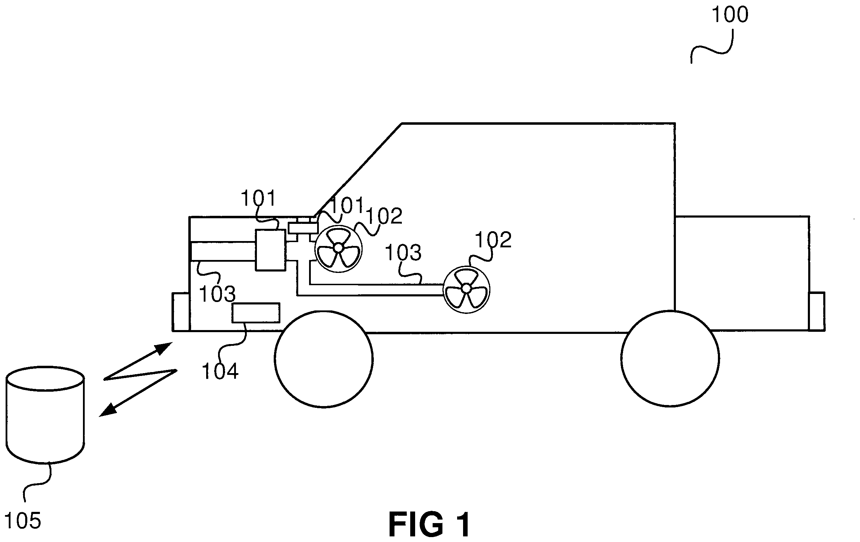

FIG. 1 shows a vehicle 100 with a cabin air system.

The cabin air system may comprise one or more filters 101, fans 102, and ducts 103 that work together to provide and circulate air throughout the cabin of the vehicle 100. The filtration system of the cabin air system may be designed to remove pollutants, dust, and other harmful particles from the air while also regulating temperature and humidity levels. In particular, the cabin air system operates as cabin air filtration system, and may be regarded as such. Similarly, the cabin air system may operate and be regarded as an in-vehicle air filtration system. In some embodiments, the filters 101, fans 102, and ducts 103 may be arranged in a series. In some embodiments, the fans 102 may be arranged or configured to draw air within the cabin towards the filters 101, i.e. the fans 102 may be configured as suction devices.

The cabin air system comprises a controller 104 which controls its operation by various control actions, e.g. fan speed and the degree to which air vents and air ducts are opened. The controller 104 may for example measure interior air quality and perform corresponding control actions. The interior air quality may be measured with one or more sensors. The one or more sensors may include at least one hardware sensor, at least one software sensor, or a combination of the at least one hardware and software sensors. In some embodiments, the one or more sensors may further include onboard sensors, and/or remote sensors. A pollutant concentration may optionally be calculated based on correlation with other measured parameters, for example, as a virtual sensor.

A filter 101 may include one or more air purification components, in particular an absorber and/or an adsorber. For example, a filter may comprise a solid material that acts as an adsorber and a liquid that acts as an absorber to remove both particles and gases from the air.

The filters 101 of the cabin air system may include air purification components that can absorb or adsorb chemical compounds chemically, physically or both. A common example is activated carbon. Another example is a humidity absorber, such as silica gel. An adsorber may also be or include a liquid. Some adsorbers absorb CO2, CO, NOx, and/or other gases that are either harmful or harmful in high concentrations. Air purification components, such as absorbers and/or adsorbers, need to be regenerated if they are to be reused and not discarded and replaced by new ones when they are fully loaded.

According to various embodiments, an air purification component, such as absorber and/or adsorber, of a vehicle is regenerated, possibly even if only partially loaded, when the vehicle is not in use. An air purification component may be regenerated by way of, but not limited to, heating said component. In particular, this may be done when the vehicle is being prepared for the next use like when an e-vehicle is charging. The regeneration during charging has the benefit that power required to regenerate the purification component may be taken from the charging power instead of the vehicle's internal battery. Regeneration (e.g. controlling a heater) may also be controlled by the controller 104.

However, indoor regeneration may be harmful if there is insufficient ventilation. For example, a CO2 level of a garage may increase to harmful levels. Furthermore, agricultural vehicles may be exposed to pesticides which are absorbed by a filter of a cabin air system which should not be regenerated indoors.

In view of the above, according to various embodiments, a process of controlling regeneration of an air purification component of a vehicle may include a step of detecting a position of the vehicle 100 within or out of a geographical boundary, or by detecting a crossing of the geographical boundary between the indoor environment and the outdoor environment. The geographical boundary may be a physical and/or a virtual boundary. For example, geofencing can be used to create one or more indoor/outdoor boundaries, and the position of vehicle 100 within or outside the geofence would determine whether the regeneration of the air purification component would be performed. This decision can be further refined by detecting whether an indoor environment has sufficiently high ventilation, and performing regeneration in that case even though the vehicle is indoors.

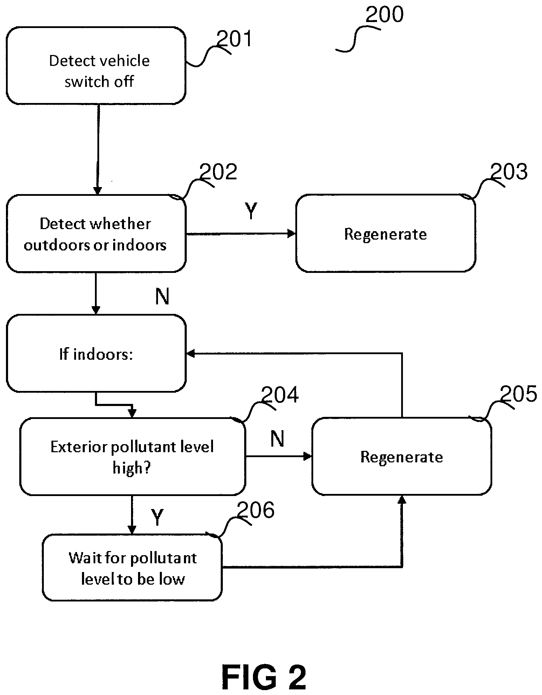

FIG. 2 shows a flow diagram 200 illustrating an air purification component regeneration controlling process or method.

The controlling process is described with reference to a regeneration of an air purification component of a vehicle but it is not limited to cars but may also for example be applied for vehicles of heavy duty, industrial, or agricultural applications.

In some embodiments, the process may be carried out by the controller 104.

In 201, it is detected whether the vehicle is switched off.

When it is detected that the vehicle is switched off (i.e. a positive determination that the vehicle is switched off), it is determined whether the vehicle is outdoors or indoors in 202. The determination of whether the vehicle is outdoors or indoors may be based on
If the vehicle is outdoors, air purification component regeneration is performed in 203, for example, if the air purification component is at least partially loaded. In some embodiments, determination of whether the air purification component is partially load may include comparing the load with one or more predetermined thresholds.

The air purification component regeneration controlling process may optionally include a detection of the exterior levels of one or more pollutants. For example, one or more pollutants, such as desorbing gas, may be generated when the air purification component is regenerated. The air purification component regeneration controlling process may allow the regeneration to start or continue only if the exterior levels are within acceptable predetermined limits.

In some embodiments, if the vehicle is determined to be indoors, a further determination may be made whether the level of one or more pollutants is higher than one or more predetermined thresholds in 204. In some embodiments, the further determination may be made continuously or at every pre-determined time interval, for example, every 10 seconds, 20 seconds, etc.

In some embodiments, the one or more pollutants for a vehicle may include, for example, exterior CO₂ or for other applications NH3, pesticide or volatiles filtered via an air intake and/or single activated carbon.

As soon as the respective one or more determined (i.e. monitored) levels of pollutants are no longer high based on comparison with the one or more predetermined thresholds, an air purification component regeneration procedure or process may be performed in 205. In some embodiments, the determination of 205 may be repeatedly carried out, e.g. with some set delay 206.

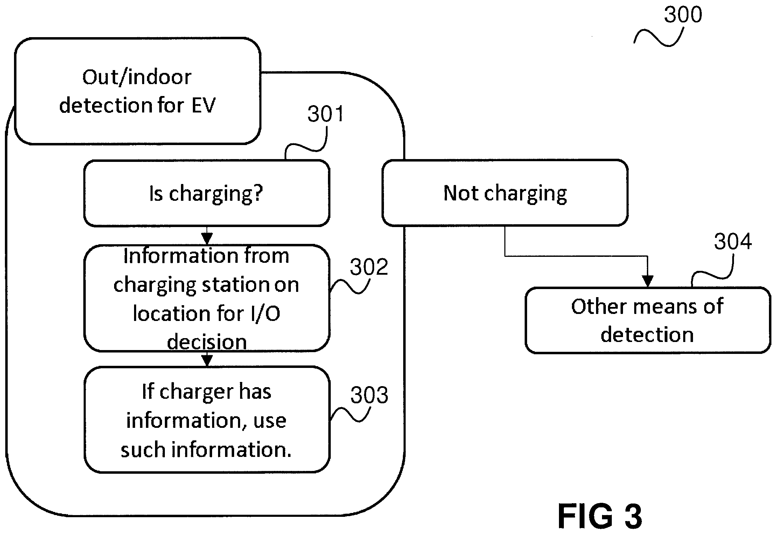

FIG. 3 shows a flow diagram 300 illustrating a determination whether an electrical and/or hybrid electrical vehicle which include an electrical motor is outdoors or indoors, i.e. step 202 of FIG. 2.

The determination shown in FIG. 3 may for example be performed by the controller 104, by a remote server, or a combination of the controller 104 and the remote server. The example may be performed by the respective controller 104 and/or server for 202 in the air purification component regeneration controlling process 200 of FIG. 2 in case of a vehicle including an electrical motor.

In 301, it is determined whether vehicle is charging. If the vehicle is charging, in 302, the controller 104/remote server attempts to obtain information from the respective charging station to determine whether the vehicle is indoors or outdoors. Such information may include position information or information which explicitly specifies whether the vehicle is indoors or outdoors which is determined by a server from the vehicle position. If the charging station has such information this information is used in 303 for determining whether the vehicle is indoors or outdoors. The location or position of the charging station may also be used as an indication of whether the vehicle is indoors or outdoors.

If the vehicle is not charging, the detection whether the vehicle is indoors or outdoors may be performed by other means in 304. For example, information about the position of the vehicle may be obtained by wireless communication from a database 105. Information about the vehicle's position may then be used for determination whether the vehicle is indoors or outdoors using geofencing, e.g. by means of a digital map. In some embodiments, one or more GPS-enabled devices in the vehicle or with the user, such as a driver, may be used to determine the vehicle's position.

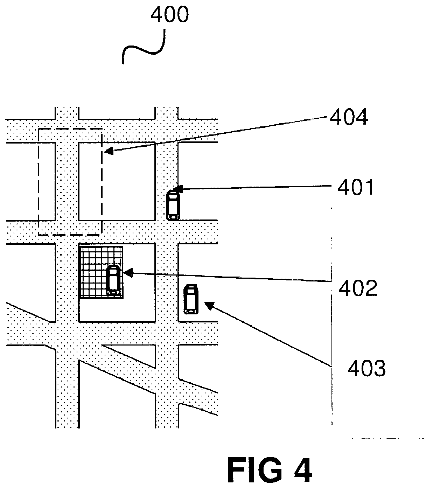

FIG. 4 illustrates the use of a digital map 400 for determination of whether a vehicle is indoors or outdoors. This may, for example, be based on the digital map 400 which indicates for various locations whether regeneration should be performed or not. The digital map 400 may be stored in the vehicle or accessed via radio communication. For example, the controller 104 determines (e.g. by GPS or other suitable geolocation system) where the vehicle is located on the map and may thus determine whether the vehicle is indoors or whether the air purification component regeneration should not be performed for another reason.

In the example of FIG. 4, dotted areas 401 represent street areas, so if the vehicle is determined to be parked at the dotted areas, a positive determination is made that the vehicle is outdoors. Similarly, open parking lots may be indicated on the map 400 (shown with a lattice hatching 402 in FIG. 4). White areas 403 on the map 400 instead correspond to residential and commercial blocks and are thus considered as indoors if nothing else is specified.

The map 400 may also indicate areas, like the one in a hatched box 404, which represents low pollution area. This corresponds to area(s) where air component regeneration is not allowed although these areas are or contain outdoor areas but air component regeneration should nevertheless not be performed, e.g. since pollution should be kept low in such an area. Non-limiting examples of low pollution areas include schools, hospitals, high density traffic area. The controller 104 may take this into account, and possibly also for cases where it is to be determined whether or not regeneration should be done while driving.

In an embodiment, a position of an electric (or hybrid) vehicle (e.g. its charger) may be used to obtain, e.g., from a reference database, the information whether it is indoors or outdoors, or (e.g. if it is indoors) in a high or low ventilated area. A position of the vehicle may be indicated by way of, but not limited to, one or more coordinates. Such coordinates may include GPS coordinates. As mentioned above, the position information may be communicated to the vehicle (e.g. to the controller 104) via the charging cable or wirelessly. For example, the position information may be wirelessly communicated to the vehicle via a phone app that was used to purchase the charging and which connects to the controller 104. In another embodiment, information whether the vehicle is indoor or outdoor may be communicated directly instead of relying on the position of the vehicle.

Further, in case of an electric (or hybrid) vehicle the air purification component regeneration controlling process may include whether checking the battery charge before and/or while doing the regeneration, as the battery should not be depleted to an extent as to compromise the operability of the vehicle.

Accordingly, it is checked, e.g. after the determination that the vehicle is outdoor (or pollution levels are low enough to perform regeneration even if indoor), whether the battery charge is sufficient (e.g. above a predetermined charging threshold) and perform the regeneration if this is the case.

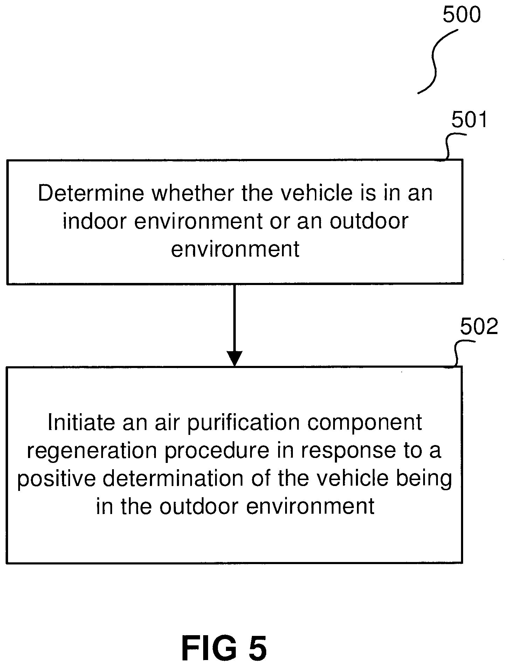

In summary, according to various embodiments, a method is provided as illustrated in FIG. 5.

FIG. 5 shows a flow diagram 500 illustrating a method for regenerating an air purification component of a cabin air system of a vehicle. The purification component may include an absorber and/or adsorber. The method may be in particular an air purification component regeneration controlling process besides the actual regeneration procedure. The method 500 may be implemented in a controller or a server. In some embodiments, the controller may be an onboard controller of the vehicle 100, such as controller 104.

In 501, it is determined whether the vehicle is in an indoor environment or an outdoor environment. The determination may be based on obtaining a location of the vehicle via one or more sensors.

In 502, an air purification component regeneration procedure for the air purification component (i.e. regeneration of the air purification component) is initiated in response to a positive determination of the vehicle being in the outdoor environment.

According to various embodiments, an air purification component (e.g. an adsorber and/or absorber) of a vehicle is regenerated, even if only partially loaded, when the vehicle is not in use. For example, the air purification component may be fully regenerated to prepare the vehicle for the next journey so that the cabin air system is ready for the next use. This may be especially beneficial for e-vehicles when they are charging, since the power to regenerate the air purification component may be taken from the charging power instead of the vehicle's internal battery. However, indoor regeneration may be harmful if there is insufficient ventilation, for example, a CO₂ level of a garage may increase to harmful levels. Furthermore, agricultural vehicles may be exposed to pesticides which are absorbed by a cabin air filter which should not be regenerated indoors. Therefore, according to various embodiments, as described with reference to FIG. 5, a process of controlling regeneration includes a step of detecting whether the vehicle is indoor or outdoor (for example by using geofencing). In case of the vehicle being indoor, the process may further include detecting whether the indoor location has sufficiently high ventilation (and, in that case, performing the regeneration although the vehicle is indoors).

The methods described herein may be performed and the various processing or computation units and the devices and computing entities described herein may be implemented by one or more circuits. In an embodiment, a "circuit" may be understood as any kind of a logic implementing entity, which may be hardware, software, firmware, or any combination thereof. Thus, in an embodiment, a "circuit" may be a hard-wired logic circuit or a programmable logic circuit such as a programmable processor, e.g. a microprocessor. A "circuit" may also be software being implemented or executed by a processor, e.g. any kind of computer program, e.g. a computer program using a virtual machine code. Any other kind of implementation of the respective functions which are described herein may also be understood as a "circuit" in accordance with an alternative embodiment. A device (e.g. cabin air system controller) which performs the method according to any of the embodiments may for example include one or more communication interfaces (to receive and send the various data and information e.g. position information and control signals) a processing unit and a memory.

While the disclosure has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A method (500) for regenerating an air purification component of a cabin air system of a vehicle (100), the method (500) comprising:
determining (501) whether the vehicle (100) is in an indoor environment (403) or an outdoor environment (401, 402); and
initiating (502) an air purification component regeneration procedure (200) for the air purification component in response to a positive determination of the vehicle (100) being in the outdoor environment (401, 402); and optionally
wherein the vehicle (100) is an electric vehicle or a hybrid vehicle.

2. The method (500) of claim 1, comprising determining whether the vehicle (100) is in the indoor environment (403) or the outdoor environment (401, 402) by detecting a position of the vehicle (100) within or out of a geographical boundary, or by detecting a crossing of the geographical boundary between the indoor environment (403) and the outdoor environment (401, 402).

3. The method (500) of claim 1 or 2, comprising generating, in response to a negative determination of the vehicle (100) being in the outdoor environment (401, 402), a control signal which blocks initiation of the air purification component regeneration procedure (200).

4. The method (500) of any one of claims 1 to 3, comprising determining whether the vehicle (100) is in the indoor environment (403) or the outdoor environment (401, 402) in response to the vehicle (100) being turned off and/or the vehicle (100) being unoccupied.

5. The method (500) of any one of claims 1 to 4, comprising, in response to a positive determination of the vehicle (100) being in the indoor environment (403), measuring a level of pollution of air surrounding the vehicle (100) and initiating the air purification component regeneration procedure (200) in response to that the level of pollution is below a predetermined threshold.

6. The method (500) of claim 5, comprising continuously monitoring the level of pollution and stopping the air purification component regeneration procedure (200) in response to that the level of pollution exceeds a predetermined pollution threshold and continuing the air purification component regeneration procedure (200) in response to that the level of pollution falls below the predetermined pollution threshold.

7. The method (500) of claim 5 or 6, wherein the level of pollution comprises or is a level of pollution for a pollutant that is generated when the air purification component is regenerated.

8. The method (500) of any one of claims 5 to 7, wherein the level of pollution comprises at least one of a carbon dioxide concentration, a pesticide concentration, and a concentration of a volatile substance.

9. The method (500) of any one of claims 1 to 8, further comprising, in response to a positive determination of the vehicle (100) being in the indoor environment, determining a level of air ventilation surrounding the vehicle and initiating the air purification component regeneration procedure (200) in response to that the level of air-ventilation is above a predetermined threshold.

10. The method (500) of any one of claims 1 to 9, wherein the vehicle (100) is an electric vehicle or a hybrid vehicle, and the method comprises initiating the air purification component regeneration procedure (200) in response to a positive determination of the vehicle (100) being in the outdoor environment (401, 402) and a battery charge level of the vehicle (100) is above a predetermined charge level threshold.

11. The method (500) of claim 10, comprising determining whether the vehicle (100) is charging at a charging station, and obtaining location-based data in response to a positive determination of the vehicle (100) being charging at the charging station, and optionally initiating an air purification component regeneration procedure (200) for the air purification component only in case of a positive determination that the vehicle (100) is charging at a charging station.

12. The method (500) of claim 11, wherein the location-based data is obtained from the charging station or a computer device used to request the charging.

13. The method (500) of claim 11 or 12, wherein the location-based data is used in determining whether the vehicle (100) is in the indoor environment or the outdoor environment.

14. A cabin air system controller (104), configured to perform the method (500) of any one of claims 1 to 13.

15. A vehicle (100) having a cabin air system, the cabin air system comprising a cabin air system controller (104), optionally according to claim 14, configured to regenerate an air purification component of the cabin air system, the cabin air system controller (104) comprises at least one processor configured to:
determine (501) whether the vehicle (100) is in an indoor environment (403) or an outdoor environment (401, 402); and
initiate (502) an air purification component regeneration procedure (200) for the air purification component in response to a positive determination of the vehicle (100) being in the outdoor environment (401, 402).

16. The vehicle (100) of claim 15, wherein the cabin air system controller (104) is configured to obtain a location data of the vehicle (100) to determine whether the vehicle (100) is in the indoor environment (403) or the outdoor environment (401, 402).

17. A computer program element comprising program instructions, or a computer-readable medium comprising program instructions which, when executed by one or more processors, cause the one or more processors to perform the method (500) of any one of claims 1 to 13.
